# EUROPÄISCHE PATENTSCHRIFT

(11) **EP 1 698 037 B1**
(45) Veröffentlichungstag und Bekanntmachung des Hinweises auf die Patenterteilung: **27.10.2010**
(21) Anmeldenummer: 04820802.9
(22) Anmeldetag: 23.11.2004
(51) Int. Cl.: H02J 17/00, H02J 5/00

(54) **VERBRAUCHER UND SYSTEM**
CONSUMER AND CORRESPONDING SYSTEM
RECEPTEUR ET SYSTEME

(30) Priorität: 19.12.2003 DE 10360604
(43) Veröffentlichungstag der Anmeldung: 06.09.2006
(73) Patentinhaber: SEW-EURODRIVE GmbH & Co. KG, 76646 Bruchsal (DE)
(72) Erfinder: SIMON, Olaf, 76646 Bruchsal (DE); MAHLEIN, Jochen, 76139 Karlsruhe (DE); SCHMIDT, Josef, 76676 Graben-Neudorf (DE)
(86) Internationale Anmeldenummer: PCT/EP2004/013267
(87) Internationale Veröffentlichungsnummer: WO 2005/064763

(56) Entgegenhaltungen:
- EP-A1- 0 499 939
- WO-A-98/57413
- WO-A-99/50806
- DE-A1- 10 112 892
- DE-A1- 10 112 892
- DE-A1- 19 636 031
- US-A- 5 293 308
- US-A- 5 293 308

## Beschreibung

Die Erfindung betrifft einen induktiv versorgten Verbraucher und ein System.

In industriellen Anlagen ist bekannt, elektrische Verbraucher, wie beispielsweise elektronische Geräte, Beleuchtungsvorrichtungen, Antriebe, Maschinen und dergleichen, aus einem Netz zu versorgen, insbesondere mit Wechselstrom von 50 oder 60 Hz. Dazu sind die Verbraucher meist mittels kostspieliger Steckverbinder mechanisch angeschlossen und elektrisch verbunden. Außerdem weist eine solche Anlage oder Maschine meist für jeden Antrieb ein T-Stück als Energieabzweigung auf. Diese T-Stücke sind aufwendig zu installieren und kostspielig, besonderes wenn sie in hoher Schutzart für den Nassbereich oder gar den aseptischen Bereich einsetzbar sein müssen. Diese T-Stücke werden auch als Verteilerkästen bezeichnet und umfassen oft auch weitere Vorrichtungsteile, wie beispielsweise Notaus-Schalter. Somit sind sie aufwendig und kostspielig, insbesondere auch hinsichtlich der Installation.

Aus der DE 101 12 892 A1 ist die Resonanzübertragung an einen bewegbaren Verbraucher bekannt.

Aus der US 5 293 308 A und aus der WO 98/57413 A ist jeweils ebenfalls ein induktives Energieübertragungssystem bekannt, bei dem der Verbraucher ebenfalls bewegbar ist.

Aus der DE 196 36 031 A1 ist eln höherfrequentes Aufmodulieren von Datensignalen bei einer induktiven Energieübertragung bekannt.

Der Erfindung liegt daher die Aufgabe zugrunde, eine einfachere und kostengünstigere Verkabelung bel elektrischen Verbrauchern für den Nassbereich und den aseptischen Bereichen zu schaffen.

Erfindungsgemäß wird die Aufgabe bei dem induktiv versorgten Verbraucher nach den in Anspruch 1 und bei der System nach den in Anspruch 7 angegebenen Merkmalen gelöst.

Merkmale der Erfindung bei dem elektrischen Verbraucher sind, dass er ein induktiv versorgter Verbraucher mit Mitteln zu seiner induktiven Versorgung, die eine elektronische Schaltung zur Versorgung von Teilen des Verbrauchers umfassen, und mit einem Gehäuse ist, das die elektronische Schaltung schützt und eine Vertiefung (6) aufweist,
wobei das Gehäuse im Bereich der Vertiefung einen U-förmlgen und/oder E-förmigen Kern aufweist, um den eine Sekundärwicklung des Verbrauchers gewickelt ist,
wobei eine Wicklungsschleife eines Primärleiters derart in der Vertiefung vorgesehen ist, dass eine induktive Kopplung mit der vom Verbraucher umfassten Sekundärwicklung hergestellt ist und
wobei der Sekundärwicklung ein Kondensator nachgeschaltet ist, dessen Kapazität mit der Induktivität der Wicklung in Resonanz ist, wobei die Resonanzfrequenz der Frequenz des Wechselstromes im Primärleiter entspricht oder nicht mehr als 10 % abweicht.

Von Vorteil ist dabei, dass der Verbraucher dicht und in hoher Schutzart in kostengünstiger Weise ausführbar ist. Die berührungslose Versorgung des Verbrauchers ermöglicht nämlich das Gehäuse einfach und schlicht, insbesondere ohne Unebenheiten oder Steckverbinder, auszuführen und somit ein Abfließen von Wasser zu ermöglichen sowie das Festsetzen von Feststoffen zu verhindern. Insbesondere ist er somit in Nassbereichen und aseptischen Bereichen einsetzbar. Die Zeit, welche für das Verkabeln notwendig ist, ist mit der Erfindung reduzierbar. Weiterhin werden Ableitströme, die bei konventioneller Steckerverkabelung auftreten, verhindert, so dass eine verbesserte elektromagnetische Verträglichkeit entsteht.

Weiter ist von Vorteil, dass die Einspeisung zu den Verbrauchern potentialfrei ist und die sonst in Anlagen vorhandene Potentialverschleppung sowie Funkentstörmittel bei

Trennschaltern entfallen. Außerdem ist eine Blindleistungskompensation, insbesondere im Verbraucher, ermöglicht und somit weist der Wechselstrom kleinere Werte auf, weshalb dann auch kleinere Leitungsdurchmesser beim Primärleiter vorsehbar sind und somit geringere Verkabelungskosten erreichbar sind. Trennschalter sind entbehrlich, da ein Auftrennen durch ein Herausziehen des Primärleiters ersetzbar Ist.

Bei der Erfindung ist ein Primärleiter derart am Verbraucher vorgesehen, dass eine induktive Kopplung mit einer vom Verbraucher umfassten Sekundärwicklung vorsehbar Ist. Von Vorteil ist dabei, dass kein Steckverbinder notwendig ist und somit die Verkabelung schnell und einfach ausführbar ist. Außerdem sind Kosten einsparbar. Da keine Kabelkonfektionierung notwendig ist, kann die installation auch durch nicht elektrotechnisch geschultes Personal durchgeführt werden.

Des Weiteren ist bei der Erfindung mindestens ein Primärleiter in einer Vertiefung oder einem Kabelkanal des Verbrauchers vorgesehen. Von Vorteil ist dabei, dass die Kabelverlegung sehr schnell und einfach ausführbar ist, nämlich durch bloßes Hineindrücken in die Vertiefung oder den Kabelkanal. Zusätzlich ist ein Vergießen mit einer Vergussmasse vorteilig ausführbar.

Insbesondere ist bei der Erfindung mindestens eine Sekundärwicklung um einen U-förmigen und/oder E-förmlgen Kern gewickelt oder in einen sehr flach ausgeführten Empfängerkopf integriert. Von Vorteil ist dabei, dass je nach verwendetem Verfahren, gewünschter Leistung und gewünschtem Wirkungsgrad die Ausführung wählbar ist.

Bei einer vodeilhaften Ausgestaltung sind die Primärleiter mindestens teilweise vergossen und/oder mittels eines Deckels geschützt. Von Vorteil ist dabei, dass eine besonders hohe Schutzart erreichbar ist und keine verschmutzungsgefährdeten Hohlräume entstehen. Derartige in Deckel bzw. Halter vergossene Leiterstücke können an einer glatten Gehäuseoberfläche des Verbrauchers montiert werden, so dass keine Vertiefung bzw. kein Kanal am Verbraucher vorgesehen werden muss.

Bei einer vorteilhaften Ausgestaltung ist der Verbraucher dicht, an der äußeren Oberfläche glatt und/oder in hoher Schutzart ausgeführt. Von Vorteil ist dabei, dass der Verbraucher insbesondere zum Einsatz in Nassbereichen und/oder aseptischen Bereichen vorsehbar ist. Bei einer vorteilhaften Ausgestaltung umfasst der Verbraucher keinen Steckverbinder oder andere elektrische Anschlussvorrichtungen an seinem Äußeren. Von Vorteil ist dabei wiederum, dass der Verbraucher in einfacher Weise dicht und In hoher Schutzart ausführbar ist.

Weitere Vorteile ergeben sich aus den Unteransprüchen.

### Bezugszeichenliste

1 Gehäuse
2 Rotorwelle
3 Gehäuseteil
4 Primärleiter
5 Primärleiter
6 Vertiefung
7 Kern mit U-förmigem Querschnitt
21 Primärleiter
22 Primärleiter
23 Schelle
24 Vertiefung
25 Vertiefung
26 Gehäuseteil
27 Kern mit U-förmigem Querschnitt
28 zweiter Kern mit U-förmigem Querschnitt
31 Deckel
32 Primärleiter
33 Primärleiter
34 Kabelkanal
35 Kern mit E-förmigem Profil
36 Kern mit E-förmigem Profil
37 Gehäuseteil
40 Gewindebohrlöchern
41 E-förmige Kerne
50 Bereich für flachen Übertragerkopf

Die Erfindung wird nun anhand von Abbildungen näher erläutert:

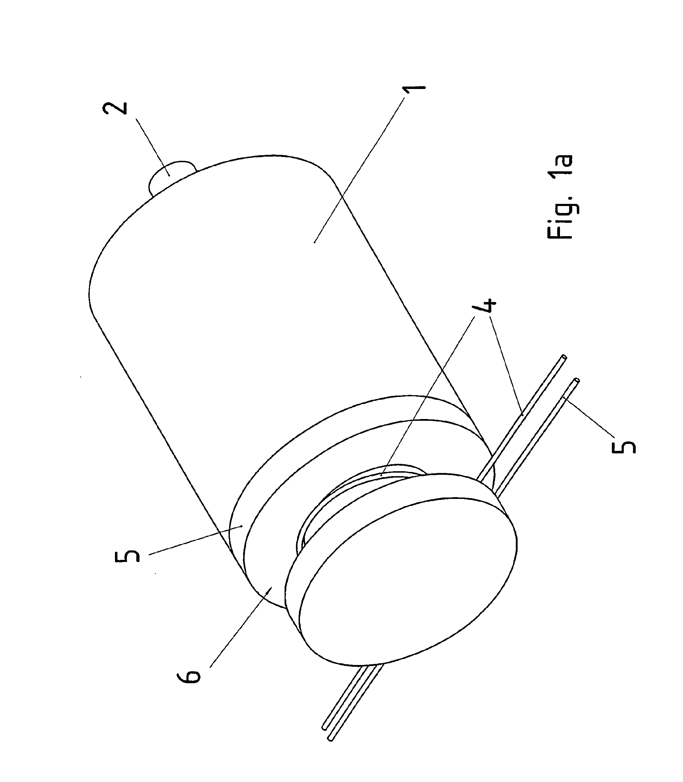

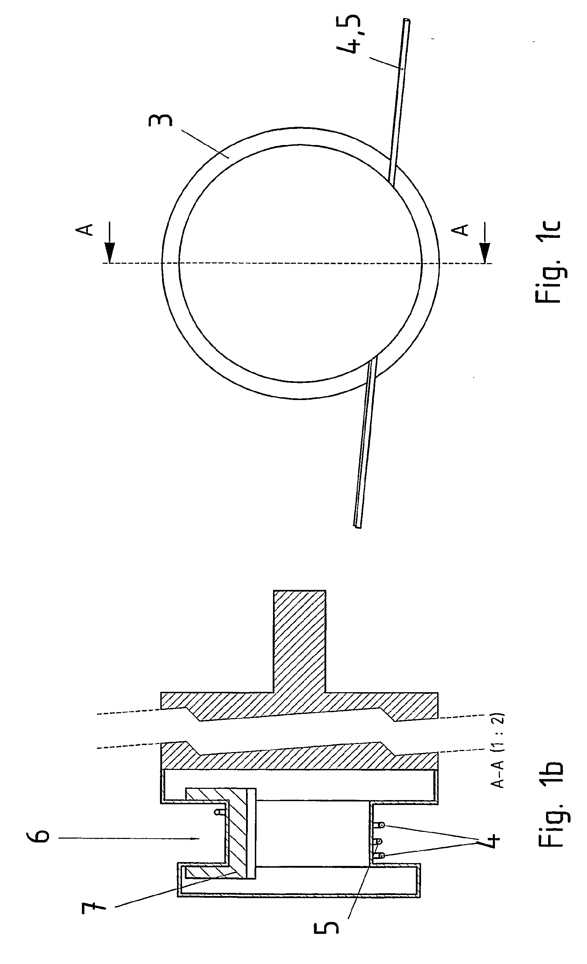

In den Figuren 1a, 1b und 1c ist ein Antrieb als erfindungsgemäßer Verbraucher In isometrischer Ansicht, in Schnittansicht und Draufsicht gezeigt. Der Antrieb umfasst einen Elektromotor mit Rotorwelle 2, der von einem Gehäuse 1 umgeben ist. Die elektronische Schaltung zur Versorgung und Steuerung des Elektromotors ist im Wesentlichen vom Gehäuseteil 3 geschützt, das eine Vertiefung 6 aufweist, in welcher ein Primärleiter eingelegt ist mit einer Wicklungsschleife. Die Rückleitung, also der zweite Prlmärteiter ist nur durchgeführt, also nicht um den Antrieb herum gewickelt.

Das Gehäuseteil 3 umfasst einen Kern 7 mit U-förmigem Querschnitt, in den eine Sekundärwicklung gelegt ist, die die elektronische Schaltung versorgt. Somit ist der Verbraucher berührungslos versorgbar mittels der induktiven Koppelung und somit galvanisch getrennt vom Primärkreis. Ein Abtrennen der Versorgung des Verbrauchers ist durch ein Abwickeln oder Herunternehmen der Schleife des Primärleiter schnell und einfach ermöglicht.

Die Speisung des Primärkreises erfolgt durch eine Vorrichtung, die den mittelfrequenten Primärstrom erzeugt und selbst mit Netzspannung versorgt ist. Insbesondere weist diese Vorrichtung ein Stromquellenverhalten bezüglich des von ihr erzeugten Primärstromes auf.

In weiteren erfindungsgemäßen Ausführungsbeispielen wird Information durch Aufmodulation von höherfrequenten Signalen auf den Primärleiter übertragen, indem die elektronische Schaltung Mittel zur Demodulation der Signale umfasst. Zum Austausch von Informationen umfasst die elektronische Schaltung auch Mittel zur Aufmodulation, wodurch dann auch Signale auf den Primärleiter aufmodulierbar sind.

Auf diese Weise ist also der Antrieb als Verbraucher berührungslos versorgbar. Die Erfindung hat zur Folge, dass eine neuartige Installationstechnik, also ein neuartiges Versorgungsprinzip, in industriellen Anlagen und/oder Maschinen verwirklichbar ist. Denn bei der Installation der Verbraucher müssen diese nun nicht mehr mit kostspieligen Steckverbindern elektrisch verbunden und verkabelt werden sondern es genügt eine Umwicklung eines Primärleiters in der Vertiefung des Antriebs. Da die Versorgung serielle erfolgen kann, ist auch kein Vorteilerkasten oder T-Stück notwendig. Ein Abschalten des Verbrauchers ist durch einfach und schnell ausführbares Herausheben oder Herausnehmen des Primärleiters aus dem Verbraucher ermöglicht.

Außerdem ist eine hohe Schutzart realisierbar, da Steckverbinder entfallen und somit der Verbraucher, insbesondere Antrieb, mit seinem Gehäuse in kostengünstiger Weise dicht herstellbar ist. Somit Ist der Antrieb Insbesondere mit einem glatten Gehäuse herstellbar und somit im Aseptikbereich oder Nassbereich verwendbar.

Mittel zur Potentialtrennung und andere Trenneinrichtungen sind einsparbar, da die Gehäusewanddicke entsprechend dimensionierbar ist und die induktive Ankoppelung leicht trennbar ist.

Die elektronische Schaltung umfasst selbstverständlich auch die sekundärseitigen Mittel für die induktive, also berührungslose Energieübertragung. Bei vorteilhafter Ausführung sind diese Mittel vorteiligerweise passive Bauteile, also Kondensatoren und Wicklungen um Spulenkerne. In einfachster Ausführung ist der Obertragerkopf mit einer Wicklung als Sekundärwicklung umwickelt und ein Kondensator nachgeschaltet, dessen Kapazität mit der induktivität der Wicklung in Resonanz ist, wobei die Resonanzfrequenz der Frequenz des Wechselstromes im Primärleiter entspricht oder nicht mehr als 10 % abweicht.

Die Antriebe sind seriell mit dem Primärleiter versorgbar. Das Auskoppeln einzelner Motoren ist ermöglicht, ohne dass die Energieversorgung der anderen unterbrochen werden muss. Es ist lediglich nötig, dass die Primärleiter-Leiterschleife um den Antrieb gelöst wird, beispielsweise durch ein Herausheben der Leiterschleife aus der Vertiefung.

Bei der erfindungsgemäßen Verkabelung entfallen T-Stücke.

Der Antrieb ist in den Figuren 1a, 1b und 1c als rotorischer Antrieb gezeichnet. In anderen erfindungsgemäßen Ausführungsbeispielen wird der Antrieb als Linearantrieb ausgeführt und induktiv versorgt.

In anderen erfindungsgemäßen Ausführungsbeispielen ist statt des Antriebs ein anderer elektrischer Verbraucher erfindungsgemäß mit Mitteln zur induktiven Versorgung ausgestattet.

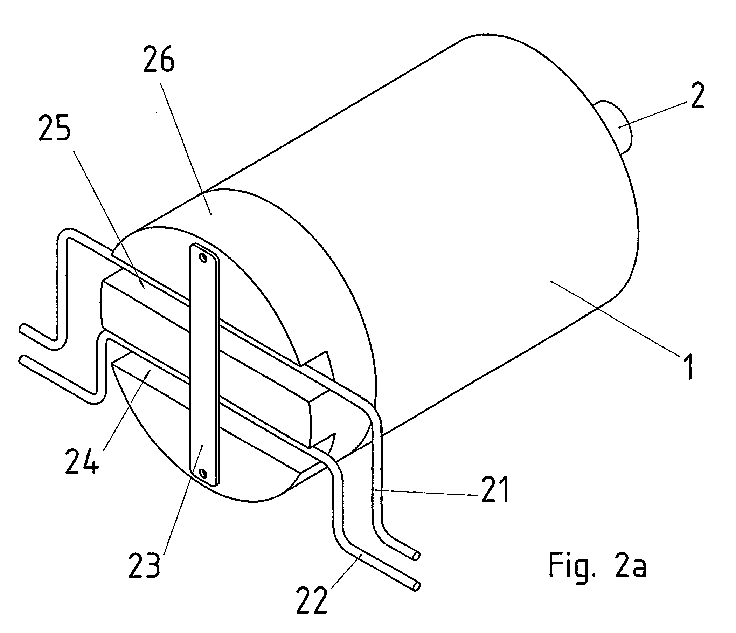

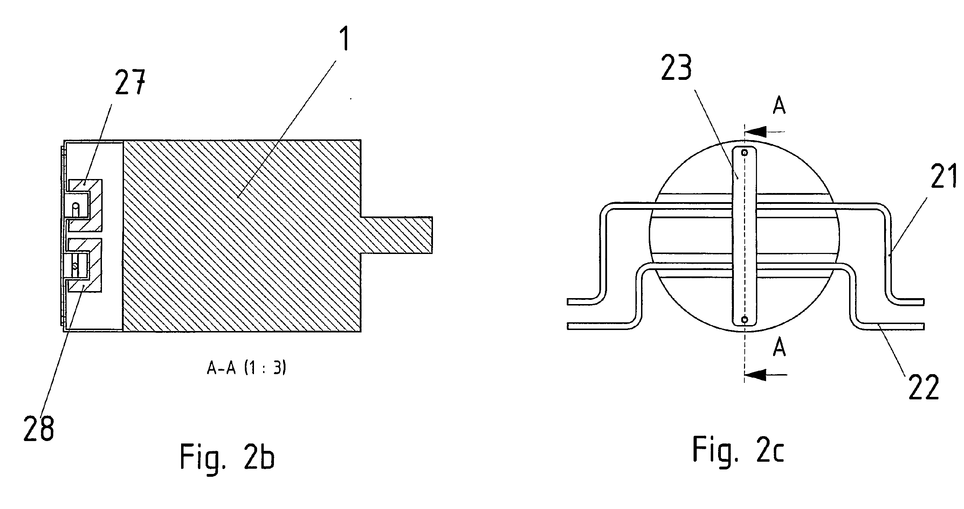

In weiteren erfindungsgemäßen Ausführungsbeispielen gemäß Figuren 2a, 2b, 2c befinden sich an der B-Seite Kerne 27, 28 mit U-förmigem Querschnitt bei Vertiefungen für die Primärleiter 21 und 22. Eine Schelle 23 dient zur Fixierung der Primärleiter in ihren Vertiefungen. Für die Funktion ist nur ein Kern 27 notwendig. Der weitere Kern 28 erhöht den Wirkungsgrad der gesamten Vorrichtung. Die Sekundärwicklungen auf den beiden Kernen 27, 28 sind zusammengeschaltet und versorgen die elektronische Schaltung, die wiederum im Bereich des Gehäusedeckels 26 angeordnet ist, der B-seltig am Gehäuse 1 vorgesehen ist.

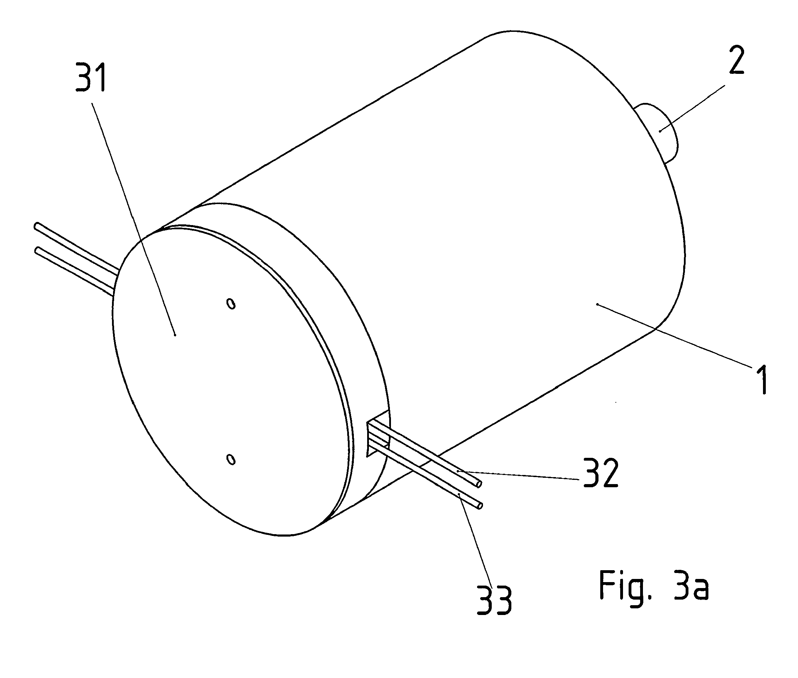

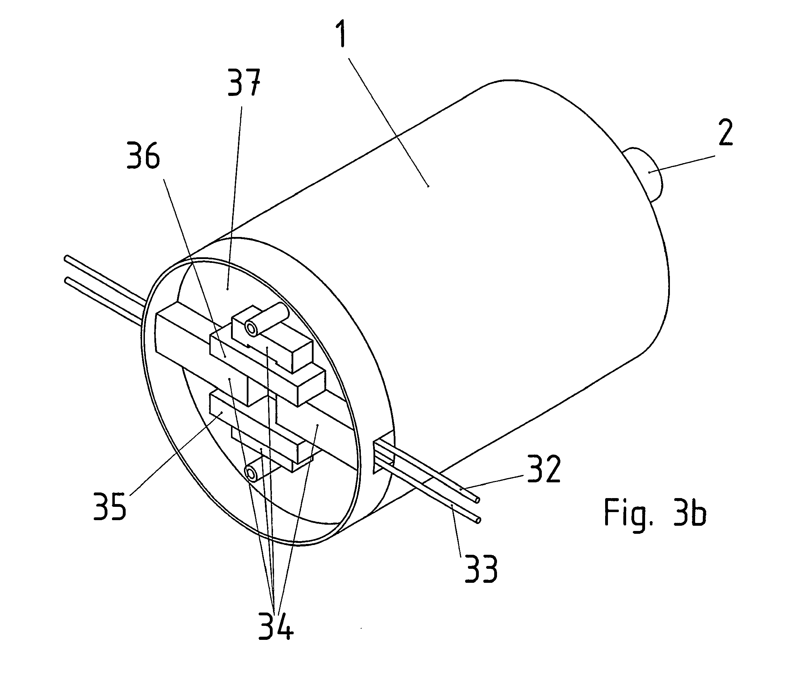

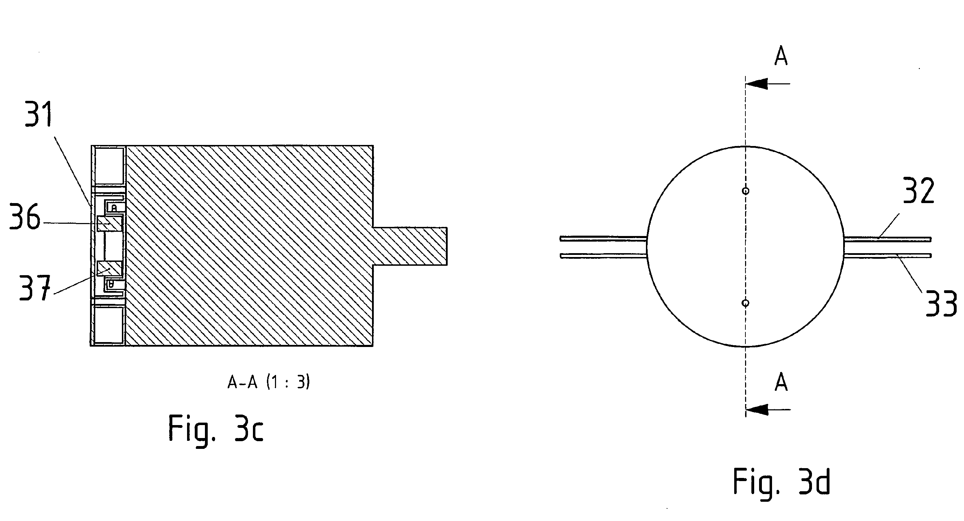

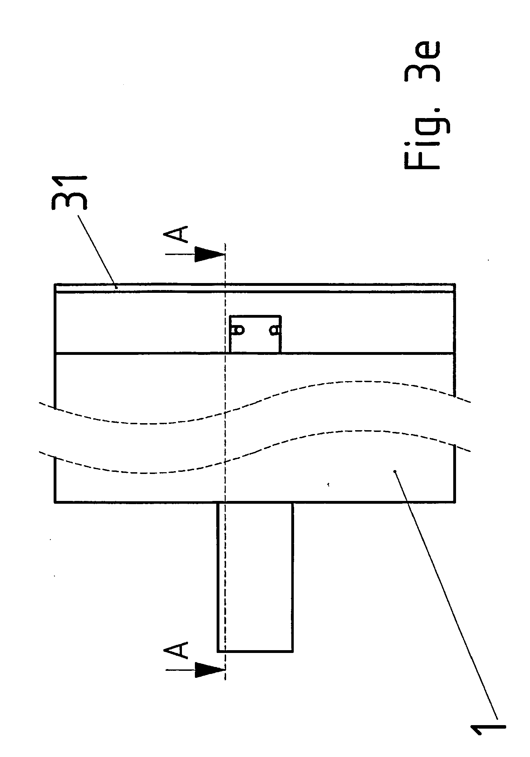

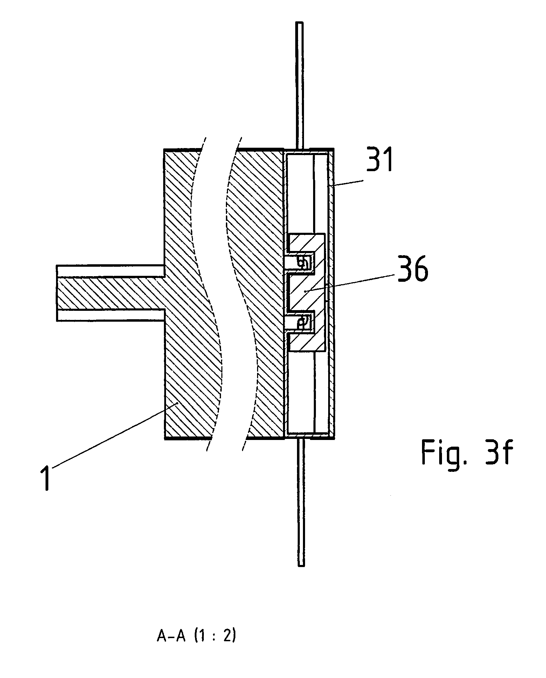

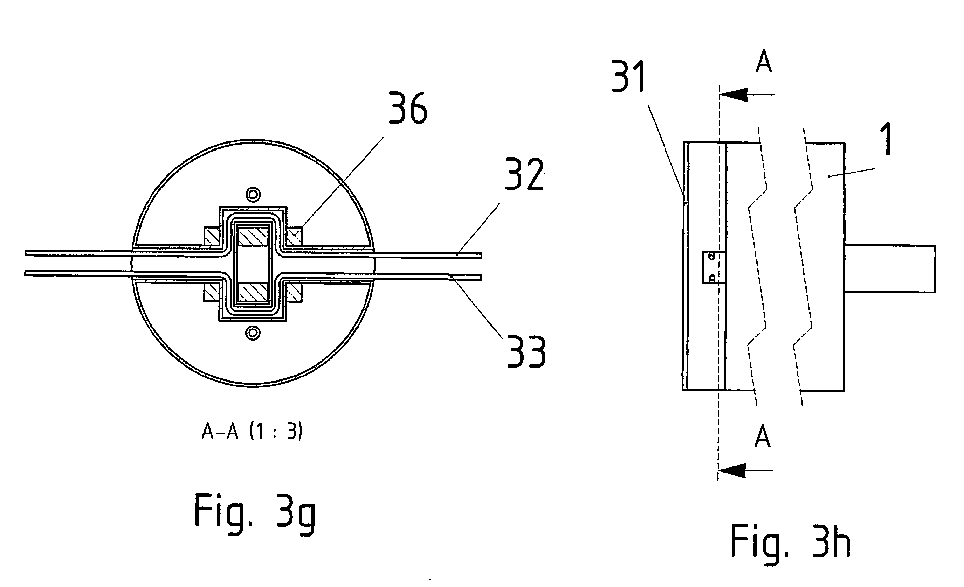

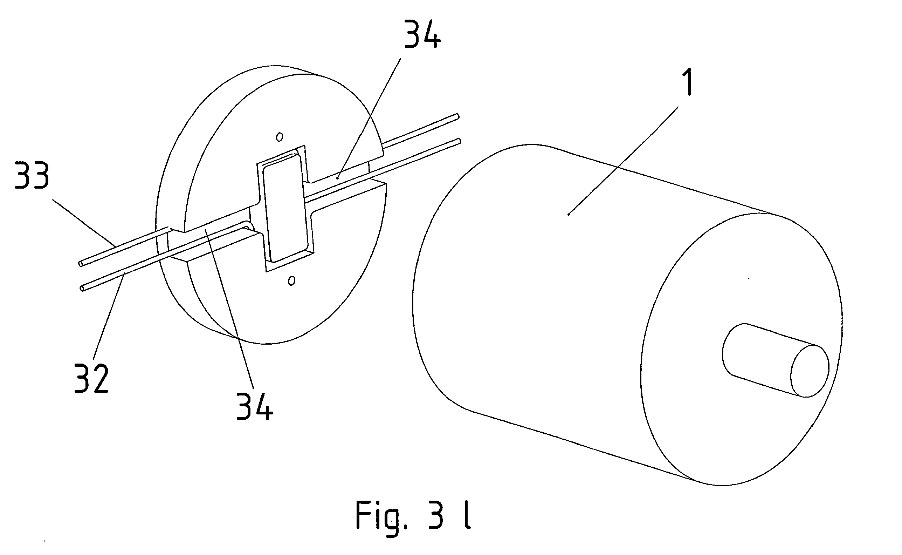

In weiteren erfindungsgemäßen Ausführungsbeispielen gemäß Figuren 3a, 3b, 3c, 3d, 3e, 3f, 3g, 3h, welche verschiedene Ansichten, teilweise mit Ausblendung von Materialkomponenten wie in Figur 3b gezeigt, darstellen, ist der erste Primärleiter 32 in einem Kabelkanal 34 gerührt, der in einer Halbschleife nach oben vorgesehen ist. Der zweite Primärleiter 33 wird in einer entsprechenden Halbschleife nach unten geführt. Zur induktiven Kopplung sind ein E-förmiger Kern 36 in der oberen Halbschleife und ein zweiter E-förmiger Kern 35 in der unteren Halbschleife vorgesehen, insbesondere im Material des Deckels. Die E-förmigen Kerne sind mit ihren Schenkeln des E an das Gehäuseteil 37 herangeführt. Das Gehäuseteil 37 schützt eine Platine, welche als Leiterbahnen ausgeführte spiralförmig verlaufende Wicklungen trägt, die als Sekundärwicklungen vorgesehen sind. Insbesondere ist ein flacher E-förmiger Kern auf diese Platine derart aufgesetzt und derart orientiert, dass dessen Schenkel in Verlängerung die Schenkel des E-förmigen Kerns 36 treffen. Somit ist eine sehr gute induktive Kopplung erreichbar, wie in Figur 3l angedeutet. Die Platine ist auch bestückbar mit weiteren elektronischen Bauelementen.

Der in Figur 3a gezeigte Deckel 31 ist für mechanische Schutzfunktion und als Kloemmeinrichtung, also Zugentlastung, vorgesehen. In der Figur 3b ist Material des Deckels 31 weggelassen, so dass die E-förmigen Kerne 35, 36 sichtbar sind und auch die Kabelkanäle 34. Der Deckel ist mit dem Gehäuse 1 lösbar verschraubbar.

In Figur 3l ist nochmals deutlicher zu sehen, wie die Primärleiter 32, 33 in die als Vertiefungen ausgeführten Kabelkanäle hineingedrückt sind.

In weiteren erfindungsgemäßen Ausführungsbeispielen umfasst dieser Deckel magnetisch leitendes Material zur verbesserten Energieeinkopplung. Insbesondere ist dieses Material auch vortelllgerwelse U- oder E-förmlg geformt.

In weiteren erfindungsgemäßen Ausführungsbeispielen werden die Primärleiter 32, 33 in den Kabelkanälen mit Vergussmasse zur Fixierung und Abdichtung vorgesehen.

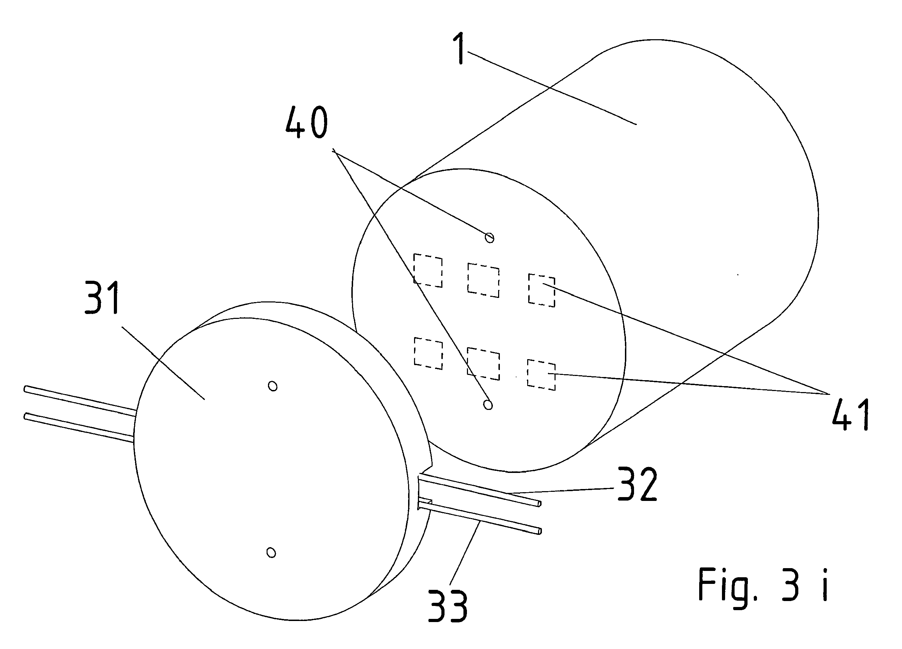

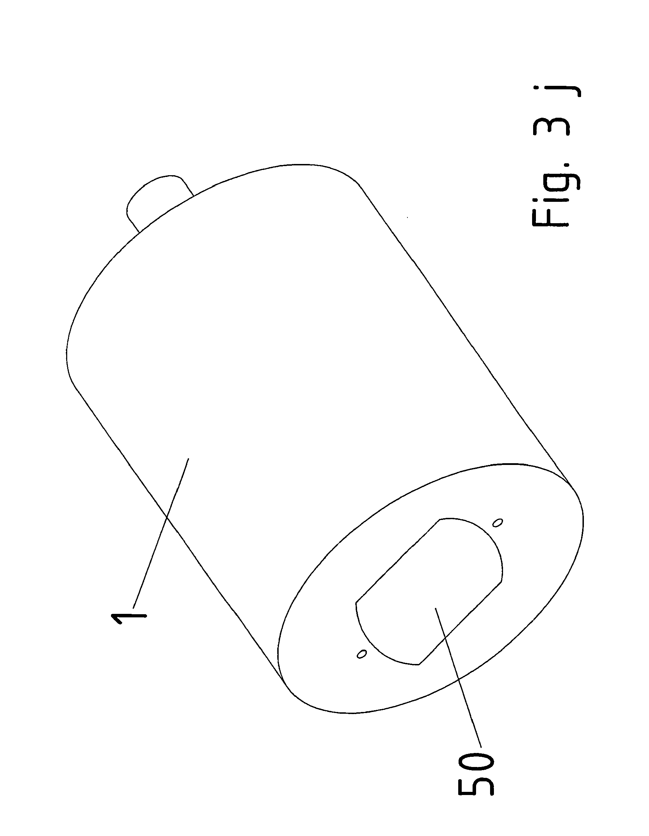

In weiteren erfindungsgemäßen Ausführungsbeispielen sind gemäß Figur 3i im Gehäuse 1 zwei E-förmige Kerne 41 eingelegt, um deren Mittelschenkel herum eine Sekundärwicklung gelegt ist. Die Befestigung des Deckels 31 erfolgt in Gewindebohrlöchern 40. In Figur 3j ist der Bereich 50 für einen flachen Empfängerkopf gezeigt. Dessen Sekundärwicklung ist als Platinenlayout, also sehr flach auf einer Platine, ausgeführt. Die Platine ist in Form des Bereiches 50 ausgeführt. Die Platine ist mit einem E-förmigen Kern bestückt, wobei die Sekundärwicklung um den Mittelschenkel des E herum gewickelt ist und die beiden anderen Schenkel im Außenbereich um die Sekundärwicklung herum angeordnet ist. Die Schenkel sind sehr kurz ausgeführt, insbesondere im Vergleich zur Gesamtlänge des E. Der Übertragerkopf ist also nach den in der DE 103 12 284.2 offenbarten Lehre ausgeführt.

Die Verbraucher sind seriell mit dem Primärleiter versorgbar. Das Auskoppeln einzelner Verbraucher ist ermöglicht, ohne dass die Energleversorgung der anderen unterbrochen werden muss. Es ist lediglich nötig, dass die Primärleiter-Leiterschleife um den Antrieb gelöst wird, beispielsweise durch ein Herausheben der Leiterschleife aus der Vertiefung.

Bei der erfindungsgemäßen Verkabelung entfallen T-Stücke.

Das Verfahren zur berührungslosen Energieübertragung und die zugehörigen Komponenten sind bei vorteilhaften Ausführungsformen vorteiligerweise ausführbar gemäß der in den Schriften DE 100 53 373, DE 103 12 284, DE 103 12 792, DE 103 39 340, DE 103 38 852, DE 103 49 242, DE 103 44 144, DE 4446 779 oder auch WO 92/17929 offenbarten Merkmale. Dabei ist besonders vorteilig die Verwendung einer Mittelfrequenz von etwa 15 bis 30 kHz. Die auf den Übertragerkopf, umfassend den Spulenkern, folgende Anpassschaltung ist besonders vorteilhaft passiv ausführbar, also ohne elektronische Leistungshalbleiter.

## Patentansprüche

1. . Induktiv versorgter Verbraucher mit Mitteln zu seiner induktiven Versorgung, die eine elektronische Schaltung zur Versorgung von Teilen des Verbrauchers umfassen,
einem Gehäuse (1), das die elektronische Schaltung schützt und eine Vertiefung (6) aufweist,
wobei das Gehäuse (1) im Bereich der Vertiefung (6) einen U-förmlgen und/oder E-förmlgen Kern (7) aufweist, um den eine Sekundärwicklung des Verbrauchers gewickelt ist,
wobei eine Wicklungsschleife eines Primärleiters (4) derart in der Vertiefung (6) vorgesehen Ist, dass eine induktive Kopplung mit der vom Verbraucher umfassten Sekundärwicklung hergestellt ist und
wobei der Sekundärwicklung ein Kondensator nachgeschaltet ist, dessen Kapazität mit der induktivität der Wicklung in Resonanz ist, wobei die Resonanzfrequenz der Frequenz des Wechselstromes im Primärleiter (4) entspricht oder nicht mehr als 10 % abweicht.

2. . Verbraucher nach Anspruch 1
**dadurch gekennzeichnet, dass**
der Verbraucher ein Antrieb ist, der zumindest einen Elektromotor und eine elektronische Schaltung zur Versorgung des Elektromotors umfasst.

3. . Verbraucher nach mindestens einem der vorangegangenen Ansprüche,
**dadurch gekennzeichnet, dass**
die Primärleiter (4) mindestens teilweise vergossen und/oder mittels eines Deckels (31) gehalten werden.

4. . Verbraucher nach mindestens einem der vorangegangenen Ansprüche,
**dadurch gekennzeichnet, dass**
der Verbraucher dicht, an der äußeren Oberfläche glatt und/oder in hoher Schutzart ausgeführt ist, insbesondere zum Einsatz in Nassbereichen und/oder aseptischen Bereichen.

5. . Verbraucher nach mindestens einem der vorangegangenen Ansprüche,
**dadurch gekennzeichnet, dass**
der Verbraucher keinen Steckverbinder oder andere elektrische Anschlussvorrichtungen an seinem Äußeren umfasst.

6. . Verbraucher nach mindestens einem der vorangegangenen Ansprüche,
**dadurch gekennzeichnet, dass**
der Verbraucher derart gestaltet ist, dass Information durch Aufmodulation von höherfrequenten Signalen auf den Primärleiter (4) übertragbar ist.

7. . System mit Verbrauchern nach einem der vorangegangenen Ansprüche,
**dadurch gekennzeichnet, dass**
Verbraucher berührungslos versorgt sind mittels jeweiliger induktiver Kopplung an einen oder mehrere Primärleiter (4),
wobei der Primärleiter (4) die Verbraucher seriell versorgt.

8. . System nach Anspruch 7,
**dadurch gekennzeichnet, dass**
der Verbraucher derart ausgeführt ist, dass der Primärleiter (4) vom Verbraucher abnehmbar ist.

9. . System nach einem der Ansprüche 7 bis 8,
**dadurch gekennzeichnet, dass**
der Primärleiter (4) aus einem AC/AC-Wandler, also Wechselstrom-Wechselstrom-Wandler, versorgt ist.

10. . System nach einem der Ansprüche 7 bis 9,
**dadurch gekennzeichnet, dass**
der AC/AC-Wandler aus dem elektrischen Netz, insbesondere mit 50 oder 60 Hz, versorgt ist.

11. . System nach einem der Ansprüche 7 bis 10,
**dadurch gekennzeichnet, dass**
mindestens ein Primärielter (4) kraftschlüssig oder formschlüssig im Verbraucher gehalten ist.

12. . System nach einem der Ansprüche 7 bis 11,
**dadurch gekennzeichnet, dass**
mindestens ein Primärleiter (4) im Verbraucher vergossen ist.

13. . System nach einem der Ansprüche 7 bis 12,
**dadurch gekennzeichnet, dass**
Verbraucher auf einem bewegbaren Teil, insbesondere Drehtisch oder Lineartrieb, angeordnet sind.

14. . System nach einem der Ansprüche 7 bis 13,
**dadurch gekennzeichnet, dass**
das Teil drehbar gelagert oder linear bewegbar Ist.

15. . System nach einem der Ansprüche 7 bis 14,
**dadurch gekennzeichnet, dass**
der Primärleiter (4) mit mittelfrequentem Wechselstrom beaufschlagt ist.

16. . System nach einem der Ansprüche 7 bis 15
**dadurch gekennzeichnet, dass**
der Primärleiter (4) mit mittelfrequentem Wechselstrom von etwa 10 bis 50 kHz, insbesondere von etwa 20 kHz, beaufschlagt ist.

17. . System nach einem der Ansprüche 7 bis 16,
**dadurch gekennzeichnet, dass**
der Primärleiter (4) über stationäre, mindestens eine Spulenwicklung umfassende Spulenkerne (7) berührungslos oder über Schleifleitung mit Energie versorgt ist.

18. . System nach einem der Ansprüche 7 bis 17,
**dadurch gekennzeichnet, dass**
der Primärleiter (4) als geschlossene Schleife verlegt ist.

19. . System nach einem der Ansprüche 7 bis 18,
**dadurch gekennzeichnet, dass**
Primärleiter (4) und Verbraucher galvanisch entkoppelt sind.

## Claims

1. An inductively powered consumer with means for the inductive powering thereof which comprise an electronic circuit for powering parts of the consumer,
a housing (1) which protects the electronic circuit and has a recess (6),
the housing (1) having in the region of the recess (6) a U-shaped and/or E-shaped core (7), around which a secondary winding of the consumer is wound,
a winding loop of a primary conductor (4) being provided in the recess (6) such that an inductive coupling with the secondary winding comprised by the consumer is produced,
and
the secondary winding being succeeded by a capacitor, the capacitance of which is in resonance with the inductivity of the winding, the resonant frequency corresponding to the frequency of the alternating current in the primary conductor (4) or not deviating more than 10%.

2. A consumer according to Claim 1, **characterised in that** the consumer is a drive which comprises at least one electric motor and an electronic circuit for powering the electric motor.

3. A consumer according to at least one of the preceding claims, **characterised in that** the primary conductors (4) are at least partly sealed in and/or are held by means of a cover (31).

4. A consumer according to at least one of the preceding claims, **characterised in that** the consumer is designed to be impervious, smooth on the outer surface and/or with a high degree of protection, in particular for use in wet areas and/or aseptic areas.

5. A consumer according to at least one of the preceding claims, **characterised in that** the consumer does not comprise any plug-and-socket connector or other electrical connection devices on its outside.

6. A consumer according to at least one of the preceding claims, **characterised in that** the consumer is configured such that information can be transmitted by modulation of higher-frequency signals to the primary conductor (4).

7. A system with consumers according to one of the preceding claims, **characterised in that** consumers are powered in contactless manner by means of inductive coupling in each case to one or more primary conductors (4),
the primary conductor (4) powering the consumers in series.

8. A system according to Claim 7, **characterised in that** the consumer is designed such that the primary conductor (4) can be removed by the user.

9. A system according to one of Claims 7 to 8, **characterised in that** the primary conductor (4) is powered from an AC/AC converter, i.e. alternating-current/alternating-current converter.

10. A system according to one of Claims 7 to 9, **characterised in that** the AC/AC converter is powered from the electrical mains system, in particular with 50 or 60 Hz.

11. A system according to one of Claims 7 to 10, **characterised in that** at least one primary conductor (4) is held in the consumer in non-positive or positive manner.

12. A system according to one of Claims 7 to 11, **characterised in that** at least one primary conductor (4) is sealed into the consumer.

13. A system according to one of Claims 7 to 12, **characterised in that** consumers are arranged on a movable part, in particular a turntable or linear drive.

14. A system according to one of Claims 7 to 13, **characterised in that** the part is mounted rotatably or movable linearly.

15. A system according to one of Claims 7 to 14, **characterised in that** the primary conductor (4) is supplied with medium-frequency alternating current.

16. A system according to one of Claims 7 to 15, **characterised in that** the primary conductor (4) is supplied with medium-frequency alternating current of approximately 10 to 50 kHz, in particular of approximately 20 kHz.

17. A system according to one of Claims 7 to 16, **characterised in that** the primary conductor (4) is supplied with energy via stationary cores (7) comprising at least one coil winding in contactless manner or via a contact wire.

18. A system according to one of Claims 7 to 17, **characterised in that** the primary conductor (4) is laid as a closed loop.

19. A system according to one of Claims 7 to 18, **characterised in that** the primary conductor (4) and consumer are electrically isolated.

## Revendications

1. Consommateur alimenté par induction comportant des moyens pour son alimentation par induction qui comprennent un circuit électronique pour alimenter des parties du consommateur,
un boîtier (1) qui protège le circuit électronique et présente un renfoncement (6),
le boîtier (1) présentant dans la région du renfoncement (6) un noyau (7) en forme de U et/ou en forme de E autour duquel un enroulement secondaire du consommateur est enroulé,
une boucle d'enroulement d'un conducteur primaire (4) étant prévue dans le renfoncement (6) de manière qu'un couplage inductif avec l'enroulement secondaire porté par le consommateur soit réalisé et
un condensateur étant placé en aval de l'enroulement secondaire, dont la capacité est en résonance avec l'inductance de l'enroulement, la fréquence de résonance correspondant à la fréquence du courant alternatif dans le conducteur primaire (4) ou ne s'en écartant pas de plus de 10 %.

2. Consommateur selon la revendication 1,
**caractérisé en ce que**
le consommateur est un entraînement qui comprend au moins un moteur électrique et un circuit électronique servant à alimenter le moteur électrique.

3. Consommateur selon au moins une des revendications précédentes,
**caractérisé en ce que**
le conducteur primaire (4) est au moins partiellement scellé et/ou maintenu au moyen d'un couvercle (31).

4. Consommateur selon au moins une des revendications précédentes,
**caractérisé en ce que**
le consommateur est étanche, lisse sur sa surface extérieure et/ou exécuté avec un degré de protection élevé, en particulier pour l'utilisation dans des zones humides et/ou aseptiques.

5. Consommateur selon au moins une des revendications précédentes,
**caractérisé en ce que**
le consommateur ne comprend pas de connecteurs ou d'autres dispositifs de raccordement électriques sur son extérieur.

6. Consommateur selon au moins une des revendications précédentes,
**caractérisé en ce que**
le consommateur est conçu de manière qu'une information puisse être transmise par modulation de signaux à plus haute fréquence sur le conducteur primaire (4).

7. Système composé de consommateurs selon une des revendications précédentes, **caractérisé en ce que**
les consommateurs sont alimentés sans contact au moyen de couplages inductifs respectifs à un ou plusieurs conducteurs primaires (4),
le conducteur primaire (4) alimentant les consommateurs en série.

8. Système selon la revendication 7,
**caractérisé en ce que**
le consommateur est réalisé de manière que le conducteur primaire (4) soit démontable du consommateur.

9. Système selon une des revendications 7 à 8,
**caractérisé en ce que**
le conducteur primaire (4) est alimenté à partir d'un convertisseur AC/AC, donc un convertisseur de courant alternatif en courant alternatif.

10. Système selon une des revendications 7 à 9, **caractérisé en ce que** le convertisseur AC/AC est alimenté à partir du réseau électrique, en particulier à 50 ou 60 Hz.

11. Système selon une des revendications 7 à 10,
**caractérisé en ce que**
au moins un conducteur primaire (4) est maintenu dans le consommateur par conjugaison de forces ou complémentarité de formes.

12. Système selon une des revendications 7 à 11,
**caractérisé en ce que**
au moins un conducteur primaire (4) est scellé dans le consommateur.

13. Système selon une des revendications 7 à 12,
**caractérisé en ce que**
les consommateurs sont disposés sur une pièce mobile, en particulier une table rotative ou un entraînement linéaire.

14. Système selon une des revendications 7 à 13,
**caractérisé en ce que**
la pièce est mobile en rotation ou linéairement.

15. Système selon une des revendications 7 à 14,
**caractérisé en ce que**
le conducteur primaire (4) est soumis à un courant alternatif à moyenne fréquence.

16. Système selon une des revendications 7 à 15,
**caractérisé en ce que**
le conducteur primaire (4) est soumis à un courant alternatif à moyenne fréquence d'environ 10 à 50 kHz, en particulier d'environ 20 kHz.

17. Système selon une des revendications 7 à 16,
**caractérisé en ce que**
le conducteur primaire (4) est alimenté en énergie sans contact via des noyaux de bobine (7) stationnaires comprenant au moins un bobinage ou par une ligne de contact.

18. Système selon une des revendications 7 à 17,
**caractérisé en ce que**
le conducteur primaire (4) est posé sous la forme d'une boucle fermée.

19. Système selon une des revendications 7 à 18,
**caractérisé en ce que**
conducteur primaire (4) et consommateurs sont découplés galvaniquement.
